## Europäisches Patentamt

## European Patent Office

## Office européen des brevets

(19)

(11) Veröffentlichungsnummer: **0 169 335**
**B1**

(12) **EUROPÄISCHE PATENTSCHRIFT**

(45) Veröffentlichungstag der Patentschrift:
**09.03.88**

(21) Anmeldenummer: **85106436.0**

(22) Anmeldetag: **24.05.85**

(51) Int. Cl.⁴: **F 16 B 13/02, F 16 B 13/04**

(54) **Dübel.**

(30) Priorität: **21.07.84 DE 3426994**

(43) Veröffentlichungstag der Anmeldung:
**29.01.86 Patentblatt 86/5**

(45) Bekanntmachung des Hinweises auf die Patenterteilung:
**09.03.88 Patentblatt 88/10**

(84) Benannte Vertragsstaaten:
**AT BE CH FR GB IT LI NL SE**

(56) Entgegenhaltungen:
**CH - A - 635 172**
**DE - A - 2 846 070**
**GB - A - 2 007 795**
**GB - A - 2 018 929**

(73) Patentinhaber: **fischerwerke Artur Fischer GmbH & Co. KG, Weinhalde 14-18,
D-7244 Tumlingen/Waldachtal 3 (DE)**

(72) Erfinder: **Fischer, Artur, Dr. h. c., Weinhalde 34,
D-7244 Waldachtal 3/Tumlingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft einen Dübel für Befestigungen an Platten, Hohlwänden und dgl. einerseits und Vollbaustoffen andererseits, bestehend aus einem eine Längsbohrung mit Innengewinde oder Innenrippen aufweisenden Schaft, sowie zwei davon ausgehenden Schenkel, die über ein mit einem Flansch und Drehsicherungsmittel versehenen, ebenfalls eine Längsbohrung aufweisenden Kopfteil zusammengehalten sind.

Es sind eine Reihe von Dübeln der obengenannten Art bekannt, deren Einsatz sowohl in Hohlwänden als auch in Vollbaustoffen vorgesehen ist. In der Regel weisen solche Dübel mehr als zwei Schenkel auf. Wegen der geringen Torsionssteifigkeit dieser Schenkel wird beim Eindrehen einer Schraube in die Längsbohrung des Schaftes eine Verdrehung erreicht, die durch das sich Übereinanderlegen der Schenkel zu einer Wulstbildung führt. Um eine gleichmässige Wulstbildung zu erreichen ist in der Regel ein sehr weiches Kunststoffmaterial für den Dübel erforderlich. Dies führt einerseits zu einem leichten Überdrehen der Schraube in der Längsbohrung des Schaftes, so dass nur ein geringes Anzugsmoment für die Befestigung eines Gegenstandes erreicht werden kann, und hat zum anderen den Nachteil, dass bei einem Einsatz des Dübels in Vollbaustoffen wegen des weichen Kunststoffmaterials keine hohen Haltewerte erzielbar sind. Darüber hinaus sind die Langzeitwerte der Befestigung wegen der ungünstigen Fliesseigenschaften des weichen Kunststoffes für hochwertige Befestigungen unzureichend.

Der Erfindung liegt die Aufgabe zugrunde, einen Dübel für Befestigungen sowohl an Platten, Hohlwänden und dgl. als auch für Vollbaustoffe zu schaffen, der die Verwendung eines hochwertigen Kunststoffes und damit höhere Haltewerte insbesondere im Vollbaustoff zulässt.

Erfindungsgemäss wird dies dadurch erreicht, dass die gemeinsame Querschnittskontur der beiden Schenkel im mittleren Bereich eine Ellipse bildet, die zum Schaft und Kopfteil hin allmählich in einen Kreis übergeht, dass die beiden zueinanderweisenden Flächen der Schenkel durch einen Spalt voneinander getrennt sind, dessen lichte Weite der Differenz zwischen dem grossen und kleinen Ellipsendurchmesser entspricht, und dass die Spaltflächen der Schenkel in Fortsetzung der Längsbohrung des Kopfteiles mit Längsrillen versehen sind.

Beim Einsatz des erfindungsgemässen Dübels für Befestigungen an Platten, Hohlwänden und dgl. wird dieser durch Eindrehen der Befestigungsschraube in die Längsbohrung des Schaftes unter radialem Ausknicken der beiden Schenkel axial zusammengefaltet. Dabei ergibt sich an der Rückseite der Platte eine als Gegenlager wirkende Abstützung, so dass die Verspannung eines Gegenstandes zu dessen Befestigung möglich ist. Durch die Ellipsenform der Schenkel, die im mittleren Bereich am stärksten ausgeprägt ist, ergibt sich beim Zusammenfalten des Dübels eine in radialer Richtung wirkende Kraftkomponente, die das Ausknicken begünstigt.

Beim Einsatz des Dübels in Vollbaustoffen wird der Dübel in ein dem Aussendurchmesser des Schaftes bzw. des Kopfteiles entsprechendes Bohrloch eingeschlagen. Die ellipsenförmige Verdickung der Schenkel wird dabei auf den Durchmesser des Bohrloches zusammengedrückt, was durch die Bemessung der lichten Weite des Spaltes zu einer Berührung der Spaltflächen im mittleren Schenkelbereich führt. Diese Spaltverengung bewirkt beim Eindrehen einer Befestigungsschraube eine entsprechende Verdrängung und Verkeilung des Dübelmaterials im Bohrloch. Die von der Längsbohrung des Kopfteiles ausgehenden Längsrillen in der Spaltfläche der beiden Schenkel bilden damit einen sich verengenden Schraubenkanal, der zur Führung der Schraube dient und das Einschneiden der Schraube in den Dübelwerkstoff erleichtert. Dieser Schraubenkanal stellt sicher, dass die Spitze der Schraube in die Längsbohrung des Schaftes geführt wird. Durch die Verengung des Spaltes wirkt der Dübel in einem Vollbaustoff in gleicher Weise wie die bekannten, im wesentlichen für Vollbaustoffe vorgesehenen Spreizdübel. Da für die Verankerung des Dübels in Platten und Hohlwänden keine Wulstbildung durch Verdrehen der Schenkel sondern lediglich ein Ausknicken erforderlich ist, kann der Dübel aus einem hochfesten Kunststoff hergestellt werden, so dass auch in Vollbaustoffen hohe Haltewerte erzielbar sind.

In einer weiteren Ausgestaltung der Erfindung kann im Mittelbereich der Schenkel eine in Spaltebene verlaufende Querschnittsschwächung vorzugsweise in Form einer Querbohrung angeordnet sein.

Mit dieser die Verankerung im Vollbaustoff nur unwesentlich beeinträchtigenden Querschnittsschwächung wird die Knickstelle beim Aufspreizen ins Freie vorbestimmt. Damit genügen schon geringe, über die Schraube in den Schaft eingeleitete Zugkräfte, um das Ausknicken zu ermöglichen. Diese zusätzliche Ausknickhilfe ist insbesondere für die Verwendung des Dübels in Gipskartonplatten zweckmässig, da in solchen Platten das Kopfteil nur ein geringes Drehmoment aufnehmen kann.

Eine weitere Verbesserung der Ausknickfähigkeit des Dübels ergibt sich durch die weitere Ausgestaltung der Erfindung, wonach im Bereich der Anbindung der Schenkel an den Schaft rechtwinklig zur Spaltebene verlaufende, den Querschnitt schwächende Kerben angeordnet sein können.

In der Patentzeichnung ist ein Ausführungsbeispiel der Erfindung dargestellt.

Es zeigen:

Fig. 1 den erfindungsgemässen Dübel,

Fig. 2 die Befestigung eines Gegenstandes an einer Platte mit dem Dübel,

Fig. 3 die Befestigung eines Gegenstandes an einem Vollbaustoff mit dem Dübel.

Der Dübel 1 besteht aus dem Schaft 2, der eine Längsbohrung 3 mit Innenrippen 4 aufweist, und den beiden vom Schaft 2 ausgehenden Schenkel 5, die durch das Kopfteil 6 zusammengehalten sind. An dem Kopfteil 6 ist als Durchschiebsicherung ein rechtwinklig abstehender Flansch 7 und als Drehsicherung Rippen 8 angeordnet, die in die Bohrlochwandung eingreifen. Die Querschnittskontur der Schenkel 5 im Mittelbereich bildet eine Ellipse, die zum Kopfteil 6 und Schaft 2 hin in einen Kreis übergeht. Der kleine Ellipsendurchmesser entspricht dabei etwa dem Bohrlochdurchmesser. Der vom Kopfteil 6 bis zum Schaft 2 sich erstreckende Spalt 9
trennt die beiden Schenkel 5. Die lichte Weite des
Spaltes entspricht der Differenz zwischen dem grossen und kleinen Ellipsendurchmesser an der grössten
Verdickung 10 der Schenkel 5. Damit sind die Schenkel auf den Durchmesser des Bohrloches zusammendrückbar.

Um das Ausknicken zu erleichtern ist im Bereich
der grössten Verdickung 10 eine Querschnittsschwächung in Form einer in Spaltebene verlaufenden Querbohrung 11 vorgesehen. Eine weitere Querschnittsschwächung befindet sich im Bereich der
Anbindung der Schenkel 5 an den Schaft 2. Diese
Querschnittsschwächung wird durch zwei rechtwinklig zur Spaltebene verlaufende Kerben 12 gebildet.
Zur Schraubenführung weisen die Spaltflächen der
Schenkel 5 jeweils eine sich von der Längsbohrung
13 des Kopfteiles 6 bis zu der Längsbohrung 3 des
Schaftes 2 sich erstreckende Längsrille 14 auf.

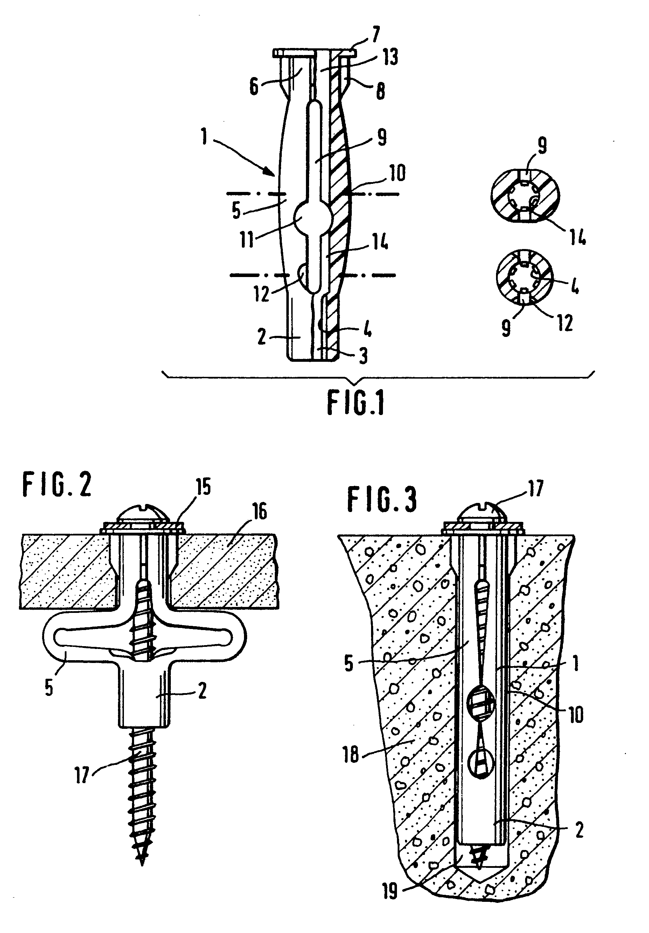

Bei der Befestigung eines Gegenstandes 15 an
eine Platte 16 gemäss Fig. 2 wird durch Eindrehen
der Befestigungsschraube 17 in die Längsbohrung 3
des Schaftes 2 der Schaft zu der Rückseite der Platte
16 hingezogen. Dabei knicken die Schenkel 5 an der
Knickstelle radial aus und falten sich axial zusammen. Es entsteht dabei an der Rückseite der Platte ein
grossflächiges Gegenlager, das auch in weichen und
porösen Platten, beispielsweise in Gipskartonplatten, hohe Haltewerte erlaubt.

Fig. 3 zeigt die Verankerung des Dübels 1 in einem
Vollbaustoff 18. Beim Eintreiben des Dübels in das
dem Schaft- und Kopfteildurchmesser entsprechende Bohrloch 19 werden die beiden Schenkel 5 aufgrund ihrer Verdickung 10 soweit zusammengedrückt, dass sich die Spaltflächen der Schenkel 5 im
Mittelbereich berühren. Dadurch entsteht eine Verengung, die beim Eindrehen der Befestigungsschraube 17 eine Verdrängung und Verkeilung des Dübelmaterials ermöglicht. Der durch die beiden Längsrillen 14 in den Spaltflächen der Schenkel 5 gebildete
Schraubenkanal dient zur Führung der Schraube 17,
bis diese in die Längsbohrung 3 des Schaftes 2 einläuft.

**Patentansprüche**

1. Dübel für Befestigungen an Platten, Hohlwänden und dgl. einerseits und Vollbaustoffen andererseits, bestehend aus einem eine Längsbohrung mit
Innengewinde oder Innenrippen versehenen Schaft,
sowie zwei davon ausgehenden Schenkel, die über
ein mit einem Flansch und Drehsicherungsmittel versehenen, ebenfalls eine Längsbohrung aufweisenden Kopfteil zusammengehalten sind, dadurch gekennzeichnet, dass die gemeinsame Querschnittskontur der beiden Schenkel im mittleren Bereich eine
Ellipse bildet, die zum Schaft und Kopfteil hin allmählich in einen Kreis übergeht, dass die beiden zueinanderweisenden Flächen der Schenkel durch einen
Spalt voneinander getrennt sind, dessen lichte Weise
der Differenz zwischen dem grossen und kleinen Ellipsendurchmesser entspricht, und dass die Spaltflächen der Schenkel in Fortsetzung der Längsbohrung
des Kopfteiles mit Längsrillen versehen sind.

2. Dübel nach Anspruch 1, dadurch gekennzeichnet, dass im Mittelbereich der Schenkel eine in Spaltebene verlaufende Querschnittsschwächung vorzugsweise in Form einer Querbohrung angeordnet
ist.

3. Dübel nach Anspruch 1, dadurch gekennzeichnet, dass im Bereich der Anbindung der Schenkel an
den Schaft rechtwinklig zur Spaltebene verlaufende,
den Querschnitt schwächende Kerben angeordnet
sind.

**Claims**

1. Wall plug for fastenings to panels, cavity walls
and similar structures on the one hand and to solid
building materials on the other hand, comprising a
shank provided with a longitudinal bore having an
internal thread or internal ribs, and two limbs leading off the shank which are held together by means
of a top part likewise having a longitudinal bore and
provided with a flange and a means for safeguarding
against rotation, characterized in that the combined
cross-sectional contour of the two limbs forms an
ellipse in the central region and gradually becomes
circular towards the shank and towards the top part,
the two facing surfaces of the limbs are separated
from one another by a slot, the inside width of which
corresponds to the difference between the major and
minor diameters of the ellipse, and the slot surfaces
of the limbs are provided with longitudinal grooves to
provide a continuation of the longitudinal bore in the
top part.

2. Wall plug according to claim 1, characterized in
that, in the central region of the limbs, there is arranged a region of weakened cross-section, preferably formed by a transverse bore, running in the
plane of the slot.

3. Wall plug according to claim 1, characterized in
that notches extending at right angles to the plane of
the slot and weakening the cross-section are arranged in the region where the limbs merge into the
shank.

**Revendications**

1. Cheville pour des fixations sur des plaques ou
panneaux, des murs creux ou analogues, d'une part,
et sur des matériaux massifs de construction, d'autre part, la cheville consistant en une tige, comportant un trou longitudinal présentant un filetage
interne ou des nervures internes, ainsi qu'en deux
branches qui en partent et sont retenues ensemble
par une tête présentant également un trou longitudinal et qui est munie d'une bride et d'un organe de
fixation anti-rotation, cheville caractérisée en ce que
le contour de section commune des deux branches
forme, dans la zone médiane, une ellipse qui se transforme progressivement en un cercle vers la tige et
vers la tête, en ce que les deux surfaces, tournées
l'une vers l'autre, des branches sont séparées l'une de l'autre par une fente dont la largeur intérieure correspond à la différence entre le grand diamètre et le petit diamètre de l'ellipse, et en ce que les surfaces de la fente séparant les branches sont munies, dans le prolongement du trou longitudinal de la tête, de rainures longitudinales.

2. Cheville selon la revendication 1, caractérisée en ce qu'un affaiblissement de section, s'étendant dans le plan de la fente, est disposé dans la zone médiane des branches, en ayant avantageusement la forme d'un trou transversal.

3. Cheville selon la revendication 1, caractérisée en ce que des encoches affaiblissant la section et s'étendant perpendiculairement au plan de la fente sont disposées dans la zone du raccordement des branches avec la tige.

FIG.1

FIG.2

FIG.3